# EUROPÄISCHE PATENTSCHRIFT

(11) **EP 2 198 135 B1**
(45) Veröffentlichungstag und Bekanntmachung des Hinweises auf die Patenterteilung: **03.12.2014**
(21) Anmeldenummer: 08801810.6
(22) Anmeldetag: 03.09.2008
(51) Int. Cl.: F01N 3/20, F01N 13/14

(54) **VORRICHTUNG ZUM NACHBEHANDELN VON ABGASSEN EINER MAGERLAUFFÄHIGEN BRENNKRAFTMASCHINE**
DEVICE FOR POST-TREATMENT OF EXHAUST GASES OF A LEAN-BURNING INTERNAL COMBUSTION ENGINE
DISPOSITIF DE TRAITEMENT DES GAZ D'ÉCHAPPEMENT D'UN MOTEUR À COMBUSTION INTERNE CAPABLE DE FONCTIONNER EN CONDITIONS PAUVRES

(30) Priorität: 09.10.2007 DE 102007048560
(43) Veröffentlichungstag der Anmeldung: 23.06.2010
(73) Patentinhaber: Audi AG, 85045 Ingolstadt (DE)
(72) Erfinder: PETERS, Axel, 85354 Freising (DE); BUDER, Marko, 85049 Ingolstadt (DE)
(74) Vertreter: Krah, Annette
(86) Internationale Anmeldenummer: PCT/EP2008/007177
(87) Internationale Veröffentlichungsnummer: WO 2009/049714

(56) Entgegenhaltungen:
- EP-A- 1 481 719
- EP-A- 1 715 153
- EP-A- 1 760 284
- DE-C1- 19 856 366
- US-A1- 2002 116 916

## Beschreibung

Die Erfindung betrifft eine Vorrichtung zum Nachbehandeln von Abgasen einer magerlauffähigen Brennkraftmaschine, insbesondere einer Diesel-Brennkraftmaschine, nach dem Oberbegriff des Anspruchs 1.

Es ist allgemein bekannt, dass Diesel-Brennkraftmaschinen und magerbetriebene Otto-Brennkraftmaschinen, bei denen Kraftstoff unmittelbar in den Brennraum im Zylinder eingespritzt wird, wegen des hohen Sauerstoffüberschusses dazu neigen, höhere NOx-Emissionen zu produzieren. Zur Verringerung des NOx-Gehaltes im Abgas solcher Brennkraftmaschinen ist die sogenannte selektive katalytische Reduktion (SCR) bekannt. Dabei wird im Abgaskanal ein Reduktionsmittel in den Abgasstrom eingespritzt, das die im Abgas enthaltenen Stickoxide in Anwesenheit von Sauerstoff am Reduktionskatalysator zu unschädlichem Stickstoff und Wasser umsetzt. Als Reduktionsmittel werden z. B. Ammoniak- oder Harnstofflösungen zugesetzt.

Problematisch mit derartigen Vorrichtungen ist jedoch, dass die selektive katalytische Reduktion in effektiver Weise nur bei sehr hohen Abgastemperaturen zuverlässig durchgeführt werden kann. So kann es bei zu geringen Temperaturen im Abgasstrang zu unerwünschten Harnstoff-Ablagerungen vor dem SCR-Katalysator kommen, was den Wirkungsgrad der selektiven katalytischen Reduktion deutlich reduziert.

Um diesem Nachteil zu begegnen, ist es aus einer Vielzahl von Druckschriften (DE 10 2004 004 738 A1, EP 1 712 756 A1, US 2006/0275192 A1, WO 2006/014129 A1) bereits bekannt, in den Abgaskanal ein Innenrohr einzusetzen, in dem ein statischer Mischer gehalten ist oder das als eine Art Prallblech fungiert, das im Abgaskanal im Spalt zwischen Innenrohr und Außenwand von Abgas umströmt wird, wobei die Zudosierung des Reduktionsmittels in den Innenrohrbereich hinein erfolgt. Mit einer derartigen Maßnahme soll erreicht werden, dass der Ort, an dem das Reduktionsmittel zugeführt wird, jeweils eine gewünschte hohe Temperatur aufweist. Derartige konstruktive Ausgestaltungen sind jedoch sowohl herstellungstechnisch als auch bauteiltechnisch relativ aufwendig und führen zu erheblichen Strömungsverlusten und einem unerwünschten Abgasgegendruck im Abgasstrang.

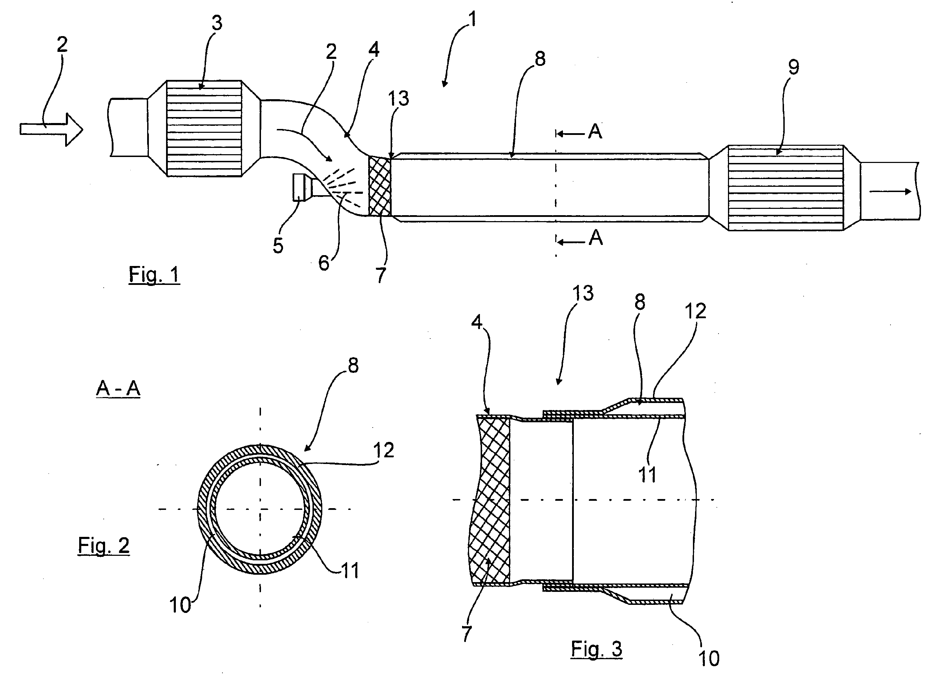

Weiter ist es aus der DE 198 56 366 C1 bekannt, um zu hohe Temperaturen im Bereich eines Einspritzventils für Reduktionsmittel für eine selektive katalytische Reduktion zu vermeiden, das Einspritzventil mittels eines unmittelbar mit der Abgasleitung verbundenen, doppelwandigen Ventilaufnahmekörpers zu umfassen, so dass Druckluft in einen Luftspalt zwischen einer Außenwandung und einer Innenwandung des Ventilaufnahmekörpers eingeblasen werden kann, um das Einspritzventil zu kühlen. Dadurch werden Auskristallisierungen von insbesondere wässrigen Harnstofflösungen durch zu hohe Einspritzventiltemperaturen vermieden. In Verbindung mit einem in der Fig. 2 dieses Standes der Technik gezeigten Ausführungsform ist ferner ein Aufbau beschrieben, bei dem das zuvor beschriebene Einspritzventil in einen doppelwandig ausgeführten Abgaskanal einmündet. In komplizierter Weise sind hier Abdicht- und Isolierelemente an der Mündungsstelle des Einspritzventiles vorzusehen, um zu vermeiden, dass kein Reduktionsmittel in den Spalt zwischen den beiden Rohrwandungen gelangt.

Die EP 1 760 284 A2 beschreibt eine Vorrichtung zur Zugabe eines Reaktanten zu einem Abgas einer Verbrennungskraftmaschine, bei der Leitschaufeln vorgesehen sind, die einer äußeren Abgasströmung einen Drall aufprägen, während eine innere Abgasströmung, die von der äußeren Abgasströmung radial umgeben wird, möglichst laminar weiterströmen soll. Mittels einer Düse wird stromab der drallaufprägenden Mittel dem Abgasstrom Harnstoff als Reaktionsmittel zugeführt, wobei die Düse und die drallerzeugenden Vorrichtungen aufnehmende Mantelrohranordnung hier durch zwei durch einen Luftspalt voneinander getrennte Mantelrohre gebildet ist. Dadurch soll ein schnelles Abkühlen des inneren Mantelrohrs verhindert werden, welches bevorzugt aus einem Material ausgebildet ist, welches sich schnell aufheizt.

Ein derartiger Aufbau weist den Nachteil auf, dass die Zudosiereinrichtung hier zwingend durch den doppelwandigen, luftspaltisolierten Bereich hindurchgeführt werden kann, was bauteiltechnisch und auch vorrichtungstechnisch relativ aufwändig ist.

Ein weiterer Nachteil einer derartigen Anordnung ist, dass es nur zu einer ungenügenden Durchmischung des in den Abgasstrom eingedüsten Reaktanten vor dessen Einströmung in einen konusförmigen Wabenkörper kommt, der als Hydrolysekatalysator ausgebildet ist und eine Umsetzung des Harnstoffs als Reaktanten zu Ammoniak bewirken soll, bevor der so angereicherte Abgasstrom in einen dem Wabenkörper (13) nachgeschalteten Reduktionskatalysator einströmt. Diese gegebenenfalls ungleichmäßige Vermischung des Reaktanten im Abgasstrom vor dem Hydrolysekatalysator führt zu einer inhomogenen Verteilung des Reaktanten im Abgasstrom, was das Ergebnis der Ammoniakerzeugung im Hydrolysekatalysator und damit das Reinigungsergebnis des Abgasstrangs insgesamt reduziert.

Die EP 1 715 153 A1 betrifft ebenfalls einen Aufbau einer SCR-Katalysatoranordnung, bei der eine Einspritzdüse für das Reduktionsmittel stromauf des eigentlichen SCR-Katalysators durch einen doppelwandigen Abgasrohrbereich hindurchgeführt ist. Zudem ist hier kein Mischereinsatz vorgesehen.

Die US 2002/011 69 16 A1 beschreibt einen Katalysatoraufbau, bei dem stromauf eines SCR-Katalysators und stromab einer Zudosierdüse für ein Reaktionsmittel ein statischer Mischer im Bereich des Einlaufkonus des SCR-Katalysators angeordnet ist.

Die EP 1 481 719 A2 zeigt einen Aufbau, bei dem nach Durchströmen einer ersten Abgasreinigungseinrichtung (4) eine Aufspaltung des Abgases in zwei Teilströme vorgesehen ist, wobei der abgezweigte Teilstrom mittels eines Reaktanten beaufschlagbar und anschließend dem Hauptabgasstrom wieder zumischbar ist.

Aufgabe der vorliegenden Erfindung ist es daher, eine Vorrichtung zum Nachbehandeln von Abgasen einer magerlauffähigen Brennkraftmaschine, insbesondere einer Diesel-Brennkraftmaschine, zur Verfügung zu stellen, mittels der auf bauteiltechnisch und herstellungstechnisch einfache Weise eine funktionssichere und effektive selektive katalytische Reduktion von Stickoxiden in einem Abgasstrom möglich ist.

Diese Aufgabe wird gelöst mit den Merkmalen des Anspruchs 1.

Gemäß Anspruch 1 ist vorgesehen, dass der Abgaskanalabschnitt in Strömungsrichtung gesehen im Bereich zwischen bzw. stromab der Reduktionsmittel-Zudosiereinrichtung bis zu der SCR-Katalysatoreinrichtung als luftspaltisolierter Abgaskanalabschnitt ausgebildet ist. Ein derartiger luftspaltisolierter Abgaskanalabschnitt bewirkt, dass sich das innenliegende, gasführende Rohr des luftspaltisolierten Abgaskanalabschnitts sehr schnell aufheizt, so dass dieses heißer wird, was für die selektive katalytische Reduktion von Vorteil ist. Gleichzeitig wird hierbei das gasführende, innenliegende Rohr des luftspaltisolierten Abgaskanalabschnitts sehr gut gegen Abkühlung von der Außenseite her, z. B. durch Spritzwasser oder dergleichen, geschützt. Weiter ist erfindungsgemäß vorgesehen, dass der luftspaltisolierte Abgaskanalabschnitt durch ein als separates Bauteil gebildetes Zwischenrohr gebildet ist, das auf einfache Weise hergestellt werden kann, z. B. durch eine doppelwandige Rohranordnung, bei der ein inneres, gasführendes Innenrohr mit einem Außenrohr umgeben wird, das einen vorgegebenen Spaltabstand zum Innenrohr aufweist. Weiter weist das Innenrohr erfindungsgemäß eine geringere Wandstärke auf als das Außenrohr, wodurch sichergestellt wird, dass sich das Innenrohr schneller auf die gewünschte Temperatur aufheizt, während das eine höhere thermische Masse aufweisende Außenrohr so ausgelegt ist, dass darüber der Kraftfluss geführt ist. D. h., dass z. B. vom einwandigen Abgaskanalabschnitt ausgehend, in dem die Zudosiereinrichtung gelagert ist, der Kraftfluss über das Außenrohr geführt ist.

Ein als separates Zwischenrohr ausgebildetes Bauteil lässt sich zudem, z. B. durch Verschweißen in einem Überlappungsbereich, sehr gut in einen Abgasstrang einer Brennkraftmaschine integrieren. Die Anbindung an die benachbarten Abgaskanalabschnitte kann z. B. im Bereich des SCR-Katalysators über eine gasdichte Flanschverbindung erfolgen. Die Anbindung in Richtung zur Reduktionsmittel-Zudosiereinrichtung hin erfolgt z. B. über eine Überlappungsverbindung, die als formschlüssige Steckverbindung ausgebildet ist, und in der die beiden ineinander gesteckten Abschnitte miteinander umlaufend gasdicht verschweißt werden.

Weiter ist erfindungsgemäß ein statischer Mischer vorgesehen, der der Reduktionsmittel-Zudosiervorrichtung nachgeschaltet ist, so dass sich die Reihenfolge Reduktionsmittel-Zudösiervorrichtung, statischer Mischer, luftspaltisolierter Abgaskanalabschnitt und SCR-Katalysatoreinrichtung ergibt, mit der sich auf bauteiltechnisch einfache Weise eine optimierte selektive katalytische Reduktion durchführen lässt. Und zwar insbesondere dadurch, dass nach der Zudosierung des Reduktionsmittels dieses durch den statischen Mischer, der gegebenenfalls auch durch eine andere, z. B. antreibbare Mischeinrichtung in äquivalenter Weise gebildet sein kann, feinst zerstäubt wird, so dass das Reduktionsmittel feinst verteilt im Abgasstrom zum SCR-Katalysator gelangt, und zwar über einen luftspaltisolierten Abgaskanalabschnitt, so dass die hohe Temperatur, die für eine effektive und optimale katalytische Reduktion erforderlich ist, funktionssicher beibehalten werden kann.

Wie zuvor bereits erwähnt, ist weiter erfindungsgemäß unmittelbar stromab der Reduktionsmittel-Zudosiereinrichtung im einwandigen, die Zudosiereinrichtung tragenden Abgaskanalwandabschnitt angeordnet.

An dieser Stelle sei nochmals ausdrücklich hervorgehoben, dass es ein wesentlicher Vorteil der Erfindung ist, dass hiermit eine Ausführungsform geschaffen wird, bei der die Reduktionsmittel-Zudosiereinrichtung in Kombination mit einem statischen Mischer auf bauteil- und herstellungstechnisch einfache Weise im einwandigen Abgasrohrbereich angeordnet werden kann, an den sich dann unmittelbar der doppelwandige luftspaltisolierte Abgaskanal anschließt, an den sich dann wiederum der SCR-Katalysator anschließt. Hierdurch wird ein bauteiltechnisch und auch herstellungstechnisch einfacher und damit preiswerter Aufbau zur Verfügung gestellt, der zudem eine hohe Funktionssicherheit aufweist. Insbesondere kann mit einer Reduktionsmittel-Zudosiereinrichtung, insbesondere ein Einspritzventil, im einwandigen Bereich des Abgaskanals eine wesentlich einfachere Anordnung und Abdichtung des Mündungsbereichs des Einspritzventils im Abgaskanal erzielt werden, als dies bei einem doppelwandigen Aufbau der Fall ist.

Besonders bevorzugt ist ein Aufbau, bei dem der Reduktionsmittel-Zudosiereinrichtung in Verbindung mit Diesel-Brennkraftmaschinen ein Diesel-Partikelfilter vorgeschaltet ist, damit im Diesel-Partikelfilter in an sich bekannter Weise zusätzliche dieselspezifische Schadstoffe herausgefiltert werden können.

Die Erfindung wird nachfolgend anhand einer Zeichnung näher erläutert.

Es zeigen:
- Fig. 1: eine stark vereinfachte, schematische Darstellung einer erfindungsgemäßen Vorrichtung zum Nachbehandeln von Abgasen einer magerlauffähigen Brennkraftmaschine,
- Fig. 2: schematisch einen Schnitt entlang der Linie A-A der Fig. 1, und
- Fig. 3: schematisch einen Überlappungsbereich eines einwandigen Abgaskanalabschnittes mit einem doppelwandigen Zwischenrohr.

In der Fig. 1 ist schematisch eine erfindungsgemäße Vorrichtung 1 zum Nachbehandeln von Abgasen einer hier beispielhaft Diesel-Brennkraftmaschine (nicht gezeigt) als magerlauffähiger Brennkraftmaschine gezeigt. Diese Vorrichtung 1 umfasst in Strömungsrichtung des Abgases 2 gesehen einen Diesel-Partikelfilter 3, an das sich ein einwandiger Abgaskanalabschnitt 4 anschließt, in dem ein Einspritzventil 5 mündet und gehaltert ist, mittels dem Reduktionsmittel, z. B. eine Harnstofflösung 6, in den Abgasstrom 2 eingespritzt werden kann.

Dem Einspritzventil 5 unmittelbar nachgeschaltet ist ein hier lediglich äußerst schematisch dargestellter statischer Mischer 7, der beispielsweise mit einem Mischerring ebenfalls in dem einwandigen Abgaskanalabschnitt 4 angeordnet ist, insbesondere mit diesem radial umlaufend verschweißt ist. Mittels diesem statischen Mischer 7 findet eine Feinstverteilung der zudosierten Harnstofflösung 6 in den Abgasstrom 2 statt. Diese Reduktionsmittel-Abgas-Mischung strömt dann anschließend entlang eines als bevorzugt separates Bauteil ausgebildeten doppelwandigen Zwischenrohres 8 zum SCR-Katalysator 9, in dem dann die katalytische Reduktion erfolgt.

Durch das einen Luftspalt 10 ausbildende Zwischenrohr 8, das ein gasführendes Innenrohr 11 aufweist, das von einem Außenrohr 12 umgeben ist, wird sichergestellt, dass das gasführende Innenrohr 11 sich schneller aufheizt und damit heißer wird, wobei es gleichzeitig auch vor einer Abkühlung von außen her, z. B. durch Spritzwasser oder dergleichen, geschützt ist. Durch die hier gezeigte Reihenfolge: Diesel-Partikelfilter 3, Einspritzventil 5, statischer Mischer 7, luftspaltisoliertes doppelwandiges Zwischenrohr 8 und SCR-Katalysator 9 wird somit in Abgasströmungsrichtung gesehen eine bauteiltechnisch und damit herstellungstechnisch einfache Vorrichtung 1 zur Verfügung gestellt, mittels der auf effektive Weise eine selektive katalytische Reduktion durchzuführen ist. Insbesondere die Anordnung des Einspritzventils 5 bzw. des statischen Mischers 7 im Bereich des einwandigen Abgaskanalabschnitts 4 lassen hier eine einfache Halterung und Anordnung der Bauteile am Abgasstrang zu.

Wie dies insbesondere der Fig. 3 zu entnehmen ist, die einen vergrößerten Querschnitt des Übergangsbereiches des einwandigen Abgaskanalabschnitts 4 in das Zwischenrohr 8 zeigt, kann dieser Übergangsbereich als Überlappungsbereich 13 ausgebildet sein, bei der hier beispielsweise das Ende des einwandigen Abgaskanalabschnitts 4 mit einer vorgegebenen Einstecktiefe formschlüssig in das gasführende Innenrohr 11 des Zwischenrohres 8 eingesteckt ist. Für eine gasdichte Verbindung werden die Bauteile dann hier radial umlaufend miteinander verschweißt. Wie dies dieser Fig. 3 zudem weiter entnommen werden kann, wird der Luftspalt 10 des Zwischenrohres 8 hier dadurch ausgebildet, dass das Außenrohr 12 in Achsrichtung gesehen endseitig mit dem Innenrohr 11 in einer formschlüssigen Anlageverbindung verbunden ist bzw. diese dort radial umlaufend miteinander verschweißt sind.

Die gegenüberliegende Anbindung in Richtung zum SCR-Katalysator 9 hin erfolgt vorzugsweise mittels einer gasdichten Flanschverbindung, die aber hier nicht mehr im Detail dargestellt ist.

## Patentansprüche

1. Vorrichtung zum Nachbehandeln von Abgasen einer magerlauffähigen Brennkraftmaschine, insbesondere einer Diesel-Brennkraftmaschine,
mit einem Abgaskanal, in dem stromab einer Reduktionsmittel-Zudosiereinrichtung (5) eine Katalysatoreinrichtung für eine selektive katalytische Reduktion als SCR-Katalysatoreinrichtung (9) angeordnet ist,
wobei ein sich in Abgasströmungsrichtung gesehen zwischen der Reduktionsmittel-Zudosiereinrichtung (5) und der SCR-Katalysatoreinrichtung (9) erstreckender Abgaskanalabschnitt als luftspaltisolierter Abgaskanalabschnitt (8) ausgebildet ist,
wobei der luftspaltisolierte Abgaskanalabschnitt (8) doppelwandig durch ein ein gasführendes Innenrohr (11) mit einem Luftspalt (10) umgebendes Außenrohr (12) gebildet ist,
**dadurch gekennzeichnet,**
**dass** das Innenrohr (11) eine geringere Wandstärke aufweist als das Außenrohr (12),
**dass** der luftspaltisolierte, durch ein separates Bauteil gebildete Abgaskanalabschnitt (8) als Zwischenrohr mit einem einwandigen, die Reduktionsmittel-Zudosiereinrichtung (5) tragenden Abgaskanalwandabschnitt (4) verbunden ist, insbesondere in einem Überlappungsbereich (13) umlaufend gasdicht verschweißt ist,
**dass** ein Mischer (7) vorgesehen ist, der der Reduktionsmittel-Zudosiereinrichtung (5) nachgeschaltet ist, so dass sich folgende Bauteilreihenfolge in Strömungsrichtung des Abgases gesehen ergibt: Reduktionsmittel-Zudosiereinrichtung (5), Mischer (7), luftspaltisolierter Abgaskanalabschnitt (8) und SCR-Katalysatoreinrichtung (9), und
**dass** der Mischer (7) unmittelbar stromab der Reduktionsmittel-Zudosiereinrichtung (5) im einwandigen, die Zudosiereinrichtung (5) tragenden Abgaskanalwandabschnitt (4) angeordnet ist.

2. Vorrichtung nach Anspruch 1, **dadurch gekennzeichnet, dass** das Außenrohr (12) mit seinen gegenüberliegenden, beiderseitigen Außenrohrendbereichen mit dem Innenrohr (11) umlaufend verbunden, insbesondere verschweißt ist.

3. Vorrichtung nach Anspruch 1 oder 2, **dadurch gekennzeichnet, dass** der luftspaltisolierte Abgaskanalabschnitt (8) mit der SCR-Katalysatoreinrichtung (9) mittels einer flanschartigen Verbindung gasdicht verbunden ist.

4. Vorrichtung nach einem der Ansprüche 1 bis 3, **dadurch gekennzeichnet, dass** stromauf der Reduktionsmittel-Zudosiereinrichtung (5) ein Diesel-Partikelfilter (3) angeordnet ist.

## Claims

1. Device for post-treatment of exhaust gases of a lean burn internal combustion engine, in particular a diesel internal combustion engine,
comprising an exhaust gas channel in which, downstream of a reducing agent metering apparatus (5), there is arranged a catalytic converter apparatus for selective catalytic reduction as an SCR catalytic converter apparatus (9),
the exhaust gas channel portion (8), which, viewed in the exhaust gas flow direction, extends between the reducing agent metering apparatus (5) and the SCR catalytic converter apparatus (9), being formed as an air-gap-insulated exhaust gas channel portion (8),
the air-gap-insulated exhaust gas channel portion (8) being formed to be double-walled by an outer pipe (12) which surrounds a gas-carrying inner pipe (11) with an air gap (10),
**characterised in that**
the inner pipe (11) has a smaller wall thickness than the outer pipe (12),
**in that**
the air-gap-insulated exhaust gas channel portion (8), as an intermediate pipe, is connected, in particular is peripherally welded in a gas-tight manner in an overlapping region (13), to a single-wall exhaust gas channel wall portion (4) which bears the reducing agent metering apparatus (5),
**in that** a mixer (7) is provided which is connected downstream of the reducing agent metering apparatus (5) so as to produce the following sequence of components when viewed in the flow direction of the exhaust gas: reducing agent metering apparatus (5), mixer (7), air-gap-insulated exhaust gas channel portion (8), and SCR catalytic converter apparatus (9), and
**in that** the mixer (7) is arranged directly downstream of the reducing agent metering apparatus (5) in the single-wall exhaust gas channel wall portion (4) which bears the metering apparatus (5).

2. Device according to claim 1, **characterised in that** the outer pipe (12) is peripherally connected, with its opposite outer-pipe end regions on both sides, to the inner pipe (11), in particular by welding.

3. Device according to either claim 1 or claim 2, **characterised in that** the air-gap-insulated exhaust gas channel portion (8) is connected in a gas-tight manner to the SCR catalytic converter apparatus (9) by a flange-type connection.

4. Device according to any of claims 1 to 3, **characterised in that** a diesel particle filter (3) is arranged upstream of the reducing agent metering apparatus (5).

## Revendications

1. Dispositif de post-traitement de gaz d'échappement d'un moteur à combustion interne à mélange pauvre, en particulier d'un moteur à combustion interne diesel,
avec un canal de gaz d'échappement, dans lequel, en aval d'un dispositif de dosage d'agent réducteur (5), un dispositif de catalyseur pour une réduction catalytique sélective est disposé en tant que dispositif de catalyseur SCR (9),
un tronçon de canal de gaz d'échappement s'étendant entre le dispositif de dosage d'agent réducteur (5) et le dispositif de catalyseur SCR (9), vu dans la direction d'écoulement des gaz d'échappement, étant constitué en tant que tronçon de canal de gaz d'échappement (8) isolé par couche d'air,
le tronçon de canal de gaz d'échappement (8) isolé par couche d'air étant formé, avec une double paroi, par un tube extérieur (12) entourant avec une couche d'air (10) un tube intérieur (11) conduisant les gaz,
**caractérisé en ce que**
le tube intérieur (11) présente une épaisseur de paroi plus petite que le tube extérieur (12),
**en ce que** le tronçon de canal de gaz d'échappement (8) isolé par couche d'air, formé par un composant séparé est, en tant que tube intermédiaire, raccordé dans une zone de chevauchement (13), en particulier de façon périphérique par soudage étanche aux gaz, à un tronçon de paroi de canal de gaz d'échappement (4) à paroi unique portant le dispositif de dosage d'agent réducteur (5),
**en ce qu'**il est prévu un mélangeur (7) qui est monté en aval du dispositif de dosage d'agent réducteur (5) de telle sorte que, vu dans le sens d'écoulement des gaz d'échappement, on a l'ordre de succession suivant des composants : dispositif de dosage d'agent réducteur (5), mélangeur (7), tronçon de canal de gaz d'échappement (8) isolé par couche d'air et dispositif de catalyseur SCR (9), et
**en ce que** le mélangeur (7) est disposé, directement en aval du dispositif de dosage d'agent réducteur (5), dans le tronçon de canal de gaz d'échappement (4) à paroi unique portant le dispositif de dosage d'agent réducteur (5).

2. Dispositif selon la revendication 1, **caractérisé en ce que**, par ses zones d'extrémité de tube extérieur opposées situées des deux côtés, le tube extérieur (12) est raccordé, en particulier par soudage, de façon périphérique au tube intérieur (11).

3. Dispositif selon la revendication 1 ou 2, **caractérisé en ce que** le tronçon de canal de gaz d'échappement (8) isolé par couche d'air est raccordé de façon étanche au dispositif de catalyseur SCR (9) au moyen d'un raccordement de type bride.

4. Dispositif selon une des revendications 1 à 3, **caractérisé en ce qu'**un filtre à particules diesel (3) est disposé en amont du dispositif de dosage d'agent réducteur (5).
